Europäisches Patentamt

European Patent Office

Office européen des brevets

(11) Publication number:

**0 372 593**
**A1**

## (12) EUROPEAN PATENT APPLICATION

(21) Application number: 89202620.4

(22) Date of filing: 17.10.89

(51) Int. Cl.⁵: **C08L 67/00,** //(C08L67/00, 57:04,71:00)

(30) Priority: 21.10.88 NL 8802591

(43) Date of publication of application:
13.06.90 Bulletin 90/24

(84) Designated Contracting States:
**AT BE CH DE ES FR GB GR IT LI NL SE**

(71) Applicant: STAMICARBON B.V.
Mijnweg 1
NL-6167 AC Geleen(NL)

(72) Inventor: Bakker, Reinier Geleyn
Zirkstraat 13
B-2000 Antwerpen(BE)
Inventor: Koning, Cornelis Eme
Parkstraaat 18
NL-6436 EL Schinnen(BE)

(54) Polyester compositions.

(57) The invention relates to polyester compositions composed of at least 50% (wt) polyester, a minor amount of a thermoplastic polymer with a modulus of elasticity lower than 350 N/mm², modified with reactive groups or groups convertible thereinto, and at most 10% (wt) of a phenoxy resin. The said thermoplastic polymer is preferably an elastomer. Small amounts of phenoxy resin have been found to further improve the notch impact strength of polyesters improved by modified thermoplastics.

EP 0 372 593 A1

## POLYESTER COMPOSITIONS

The present invention relates to polyester compositions composed of:
  a. at least 50% (wt) polyester;
  b. a minor amount of a thermoplastic polymer with a modulus of elasticity lower than 350 N/mm², modified with reactive groups or groups convertible thereinto;
  c. a minor amount of another kind of polymer.

Although polyesters have many good properties, they do fail in some respects. For instance, the notch impact strength in particular is not satisfactory. Many and varied attempts have been made to improve the notch impact strength by mixing polyesters with various other polymers.

For instance, in NL-A-76.05494 (corresponds with US-A-4172859) compositions are described consisting of more than one phase and containing at least 60% (wt) polyester and at most 40% (wt) of a thermoplastic polymer. Such thermoplastic polymer must contain positions adhering to a matrix, in other words it must contain reactive groups. Moreover, the modulus of elasticity must be lower than 350 N/mm², and such thermoplastic polymer is therefore referred to as soft phase. According to NL-A-76.05494 the polymers that can be used as soft phase conform to a general formula which is so comprehensive that it comprises innumerable polymers. That almost countless number of possibilities shows that the molecular structure is not essential. What is essential, on the one side, is the reactivity in respect of the matrix polymer, and on the other side, for improving the notch impact strength of the relevant polymer compositions, it is the modulus of elasticity that is essential. Thus it has been found that with homopolymers containing reactive groups, for instance ethylene polymers, more particularly ethylene polymers with very low density, which comply with the said criteria, similar results can be achieved also. The thermoplastic polymer used for improving the notch impact strength of polyesters is preferably an elastomer.

The thermoplastic polymer must contain reactive groups. It may also contain groups that can be converted into reactive groups. Polymers containing reactive groups or groups convertible thereinto can be obtained by copolymerization of one or more monomers, such as alkenes, alkadienes, etc., for instance ethylene, propylene, butene, isobutene, butadiene, isoprene, etc., with one or more monomers containing one or more reactive groups, for instance one or more acid groups (or groups convertible thereinto) such as, for instance, acrylic acid, methacrylic acid, maleic anhydride, etc. Also, monomers containing reactive groups can be grafted onto non-reactive polymers, and such graft polymers are generally preferred. Although the compositions according to NL-A-76.05494 have a greater notch impact strength than the polyesters themselves, polyester compositions with further improved notch impact strengths are nevertheless much needed.

From EP-A-125.739 polyester compositions are known containing, in addition to a modified thermoplastic polymer limited according to that application to a certain grade of modified elastomers, a minor amount of at most 15% (wt) of a different grade of polymer as a component serving to further improve the notch impact strength. According to that patent application that third component is a polyurethane.

It has now been found that polyester compositions consisting of:
  a. at least 50% (wt) polyester,
  b. a minor amount of a thermoplastic polymer with a modulus of elasticity lower than 350 N/mm², modified wholly or partly with reactive groups or groups convertible thereinto,
  c. a minor amount of a phenoxy resin have good notch impact strengths.

The amounts of phenoxy resin required for a considerable improvement of the notch impact strengths are small and they are notably considerably smaller than the amounts of polyurethane required for such an improvement according to EP-A-125.739.

The polyester compositions according to the present invention preferably contain:
  a. at least 50% (wt) polyester,
  b. 5-49.5% (wt) thermoplastic polymer with a modulus of elasticity lower than 350 N/mm², modified wholly or partly with reactive groups or groups convertible thereinto,
  c. 0.5-10% (wt) phenoxy resin, where a + b + c = 100 parts by weight.

The present compositions may, in addition, contain customary other components, such as stabilizers, slip agents, lubricants and/or release agents, colourants, pigments, fillers, etc.

More preferably the polyester compositions according to the present invention consist of:
  a. 70-94.5% (wt) polyester,
  b. 5-25% (wt) modified elastomer and
  c. 0.5-5% (wt) phenoxy resin.

Within the scope of the present invention polyester is understood to include the group of polyesters from diols or diphenols and carbonic acid usually referred to as polycarbonates. The polycarbonates are generally known and commercially available on a large scale.

The group of compounds designated here by polyester also comprises, in addition to the polycarbonates just mentioned, which are polyesters from carbonic acid, polyesters derived from other acids, particularly from organic acids.

The polyesters are long-known polycondensates built up mostly from at least one aromatic dicarboxylic acid with 8-14 carbon atoms and from at least one diol with the general formula of $HO(CH_2)_nOH$, where n has a value of 2-10. The polyesters that can be used in the compositions according to the invention are not limited to the above-mentioned most customary polyesters. There are indeed also polyesters in which the aromatic dicarboxylic acid has been replaced wholly or partly by one or more aliphatic or cycloaliphatic dicarboxylic acids, respectively polyesters in which the diol has been replaced wholly or partly by one or more bivalent phenols. Further, polyesters are known which are polycondensates from hydroxy acids such as p-hydroxybenzoic acid, 6-hydroxy-2-naphthoic acid, etc. Also polyesters are known with reduced combustibility and/or flammability, because in the dicarboxylic acid and/or the diol one or more halogen atoms, particularly bromine atoms, are substituted. Other modifications are possible, too. The expression 'polyester' used in this application therefore comprises known polycarbonates as well as known polyesters. The expression 'polyester' comprises also mixtures of polyesters and/or polycarbonates. Mixtures can be composed of various polyesters and/or polycarbonates, as well as of polyesters or polycarbonates from the same building blocks with different molecular weights. All conceivable combinations are covered by the expression 'polyester'. The molecular weights of the polyesters incorporated in the present compositions may vary within wide limits. Generally, the intrinsic viscosity, which is a measure of the molecular weight, will have a value of about 0.4 to 4.0 dl/g.

In the present compositions the polyesters are preferably polyalkyleneterephthalate, more particularly polyethyleneterephthalate or polybutyleneterephthalate. Such polyalkyleneterephthalates may contain minor amounts of other dicarboxylic acid and/or dihydroxy compounds, which generally do not exceed 20 moles %. Examples of other dicarboxylic acids are: phthalic acid, isophthalic acid, naphthalene-2,6-dicarboxylic acid, 4,4'-diphenyldicarboxylic acid, succinic acid, adipic acid, sebacic acid, azelaic acid, cyclohexanediacetic acid. Other dihydroxy compounds may be aliphatic diols with 3-12 carbon atoms or cycloaliphatic diols with 6-21 carbon atoms or diphenols, such as propanediol-1,3, 2-ethylpropanediol-1,3, neopentylglycol, hexanediol-1,5, hexanediol-1,6, cyclohexanedimethanol-1,4, 3-methylpentanediol,2,4, 2-methylpentanediol-2,4, 2,2-diethylpropanediol-1,3, hexanediol-2,5, 1,4-di-(beta-hydroxy-ethoxy)-benzene, 2,2-bis-(4-hydroxycyclohexyl)-propane, 2,4-dihydroxy,1,3,3-tetramethylenecyclobutane, 2,2-bis-(3-beta-hydroxyethoxyphenyl)-propane, 2,2-bis-(4-hydroxypropoxyphenyl)-propane, hydroquinone, 4,4'-biphenol, bisphenol-A, tetramethylbisphenol-A, etc. Polyesters are also understood to include polyarylates, particularly from bisphenol-A and other bisphenols and isophthalic acid or terephthalic acid.

The polyalkyleneterephthalates may be branched by the incorporation of small amounts of tri- or tetravalent alkanols, or tri- or tetravalent carboxylic acids. Examples of such compounds are: trimesitic acid, 1,2,4-benzenetricarboxylic acid, trimethylolethane and -propane and pentaerythritol. Generally not more than 1 mole % of such compounds will be incorporated. The above also applies to polyesters from other dicarboxylic acids and/or diols.

Component b of the present compositions is a thermoplastic polymer, i.e. an elastomer modified by grafting or copolymerisation of monomers with reactive groups or convertible hereinto. Grafting is preferred. In connection with the present compositions it should be noted that - as remarked previously in respect of NL-A-76.05494 - the molecular structure of component b is not really essential. Component b does have to contain reactive groups and the modulus of elasticity does have to be lower than 350 N/mm². The reactive groups of component b must be capable of reacting with the OH groups of the phenoxy resin.

The reactive groups need not be present in every polymer molecule. In the grafting of a monomer with one or more reactive groups or groups convertible thereinto onto a non-reactive polymer, a statistical distribution of the grafted monomer will generally be obtained in the presence, moreover, of non-modified molecules, too. It has been found that in many cases component b, when consisting of a polymer modified by either copolymerization or grafting, may also partly consist of non-modified polymer, which may consist, apart from polymer not modified in copolymerization or grafting, also of non-modified polymer added separately. The permissible amount of non-modified polymer in component b depends on a number of factors and may as a result show quite some variation, although it will be clear that such amount cannot be unlimited.

For certain uses, the notch impact strength of a composition according to the invention with exclusively modified component b may, for instance, far exceed the desired notch impact strength, and then addition of a non-modified thermoplastic polymer, which generally reduces the notch impact strength, may be acceptable. The amount of compound containing reactive groups used in the copolymerization or grafting also in part determines the amount of non-modified polymer that may be present in the compositions according to the invention. It may even be more economic to modify a polymer with relatively many reactive groups and then to dilute it so to say with non-modified polymer to obtain an average corresponding with the desired content of reactive groups.

It will be clear that this variant and other obvious ones come within the scope of the invention.

The modulus of elasticity of the polyester component (component a) is higher than that of component b and will generally be at least 5x as high and mostly at least 10x as high. In the latter case the modulus of elasticity of component b will mostly be considerably lower than 350 N/mm$_2$.

Reactive groups or groups convertible thereinto can be incorporated in component b in a manner known in the art by the copolymerization with or by the grafting of a monomer containing such groups. Component b may also be, and such is usually preferred, an elastomer with reactive groups grafted thereon. Grafting processes are generally known. Besides acid groups or acid anhydride groups, for instance maleic anhydride groups, it is possible also, for instance, as component b to use modified polymers with epoxy groups incorporated therein by the grafting of glycidylmethacrylate. Acid chloride groups may be present, too.

As set out hereinbefore, component b is a thermoplastic polymer, i.e. an elastomer, modified wholly or partly with reactive groups or groups convertible thereinto, but for the rest the molecular structure is not essential. Any compound with large molecules that meets the said criteria can be used as component b. Such elastomer can, for instance, have been chosen from the groups of the generally known ethylene-propylene copolymers, ethylene-propylene-diene terpolymers, polyisobutene rubbers, polyisoprenes and polybutadienes. The reactive groups may, for instance, be carboxyl, carboxylic anhydride, sulphonic acid, acid chloride or epoxy groups. Most preferably the reactive groups are carboxyl or carboxylic anhydride groups.

The said polymers that can be used as component b are generally known, so that no further description thereof need be given. The reactive groups have preferably been applied by the grafting of compounds with at least two carboxyl groups or groups convertible thereinto such as, for instance: maleic acid, fumaric acid, itaconic acid, citraconic acid, mesaconic acid, the anhydrides of maleic acid, itaconic acid and citraconic acid, monoalkyl esters of the said acids, with the alkyl group preferably containing 1 or 2 carbon atoms, bicyclo-(2,2,1)-hept-5-ene-2,3-dicarboxylic anhydride on a thermoplastic polymer of preferably one or more alkenes and/or alkadienes.

It is generally desirable that 0.5-10% (wt) and preferably 1-5% (wt) of one or more compounds containing reactive groups should be grafted on the base polymer. Such modified polymers are known per se, so that they need not be further discussed in this connection. Embodiments of such a modification are mentioned in EP-A-125.739, although they are not limiterd thereto, of course.

The phenoxy resins present as component c in the present compositions are generally known amorphous polymers derived from diphenols and epichlorohydrin. Such polymers are also called polyhydroxy ethers. A summarized description of phenoxy resins is given in a general article by W.F. Hale in Encyclopedia of Polymer Science and Engineering, 1st edition, volume 10, pp. 111-112. The expression 'phenoxy resin' in this specification comprises all polymers that are comprised by the said general article. Phenoxy resins are produced on an industrial scale and are commercially available on a large scale.

The most customary phenoxy resin is derived from 2,2-bis-(4-hydroxyphenyl)-propane, (bisphenol-A), and epichlorohydrin, and such a resin is given preference to as component c in the present compositions.

It is surprising that small amounts of phenoxy resin are capable of substantially improving the notch impact strength of compositions of a polyester and a modified thermoplastic polymer known in the art. The fact is that from US-A-3,962,174 compositions are known of polubutyleneterephthalate or polypropyleneterephthalate polymers with a reinforcing filler and small amounts of 0.1 to about 8% (wt) of a phenoxy resin derived from bisphenol A with a molecular weight of 15,000 to 75,000, which, however, do not contain any modified thermoplastic. Tables I and II of US-A-3,962,174 show that the notch impact strength is not or hardly influenced by the phenoxy resin. By contrast, phenoxy resins do considerably improve, as has been found, the notch impact strength of polyester compositions containing modified elastomers.

The compositions according to the present invention can be prepared by mixing components a, b and c and possible additives such as, for instance, stabilizers, slip agents, lubricants and/or release agents, colourants, pigments, fillers, etc., in any manner known for that purpose and in any desired order of mixing the components. It is almost a matter of course that all components can be mixed also at once. The components can first be mixed as powder and can then at elevated temperatures of about 150ºC to 300ºC

be kneaded in devices customary for that purpose, such as Banbury mixers, extruders and the like, but they can also be passed into such kneaders direct and be mixed therein. Preference is given to first mixing components b and c, preferably at elevated temperatures of at least 100¤C and more preferably of at least 150¤C. The chosen mixing temperatures should preferably not be higher than 230¤C. Generally, when mixing above about 230¤C, the results will be a bit less favourable. The composition of components b and c thus obtained is subsequently mixed with the polyester and any other components. Components b and c are reactive in respect of each other. It is supposed that the reaction between components b and c has a favourable effect on the notch impact strength, although the invention is not bound to any theoretical statement. If the reaction between components b and c should favour the improvement of the notch impact strength, such a reaction is likely to proceed better and to proceed further when first components b and c are mixed with each other, in which process the reaction mixture of these components is not diluted by other components. Presumably, in connection therewith, it is favourable also to mix components b and c at elevated temperatures. However, for the purpose of obtaining the compositions with the notch impact strength according to the invention such a pro cedure is not necessary, although it is clearly given preference to.

It is true that the weight ratio of components b and c is not very critical, but it is desirable for the b : c weight ratio to be at least 4. The best results are obtained with b : c weight ratios between 4 : 1 and 40 : 1, and most preferably the weight ratio is about 10 : 1 to 20 : 1. Within said limits the most suitable ratios are determined in part by the amount of reactive groups in component b.

The invention is further elucidated by the following examples without being limited thereby. Parts and percentages are parts by weight resp. percentages by weight.

Example 1

In a Brabender Plasticorder an ethylene-propylene-diene terpolymer modified with maleic anhydride was mixed for 5 minutes at 225¤C with polyethyleneterephthalate and with a phenoxy resin by kneading at 100 revolutions per minute.

The polyethyleneterephthalate was Arnite A04-900, a product marketed by AKZO.

The modified ethylene-propylene-diene terpolymer was Keltan 378, a polymer marketed by DSM with 65% (wt) internal ethylene and 4% (wt) internal ethylidenenorbornene and the rest internal propylene, modified by grafting 0.7% (wt) maleic anhydride thereonto.

The phenoxy resin was a phenoxy resin derived from bisphenol-A and epichlorohydrin, marketed by Union Carbide under the trade name of Phenoxy PKHH.

The mixing ratio was 80% (wt) polyethyleneterephthalate, 18% (wt) modified ethylene-propylene-diene terpolymer, 2% (wt) phenoxy resin.

The notch impact strength measured at 23¤C according to ISO 180 was 30 kJ/m2.

Comparative Example A

In the same way a mixture was prepared of 80% (wt) of the same polyethyleneterephthalate and 20% (wt) of the same modified ethylene-propylene-diene terpolymer. The notch impact strength thereof was only 6 kJ/m2.

Examples 2-14

In a Brabender Plasticorder compositions were prepared of the ethylene-propylene-diene terpolymer modified with 0.7% (wt) maleic anhydride, used in example 1, with the Phenoxy PKHH phenoxy resin, used in example 1, by kneading for 5 minutes at 180¤C at a speed of 100 revolutions per minute.

The composition of 95% (wt) modified polymer with 5% (wt) phenoxy resin is designated hereinafter as A1, of 90% (wt) modified polymer with 10% (wt) phenoxy resin as A2 and of 80% (wt) modified polymer with 20% (wt) phenoxy resin as A3.

In the same way three compositions were prepared using the same ethylene-propylene-diene terpolymer, which was now modified, however, by the grafting of 2.0% (wt) maleic anhydride. These compositions are referred to as A4 (95 : 5), A5 (90 : 10) and A6 (80 : 20).

The compositions described hereinbefore were subsequently kneaded in a Brabender Plasticorder for 5 minutes at 100 revolutions per minute with polyethyleneterephthalate at 270ºC and with poly-butyleneterephthalate at 250ºC. Composition A5 was kneaded in the same way with polycarbonate at 250ºC.

The polyethyleneterephthalate was the product marketed by AKZO under the trade name of Arnite A 04-900; the polybutyleneterephthalate was the product marketed by AKZO under the trade name of Arnite T 02-600 and the polycarbonate was the product marketed by Enichem under the trade name of Sinvet 221.

The mixing ratios of polyester to the compositions designated by A1 to A6 inclusive and the notch impact strengths of the compositions obtained are mentioned in table 1 below.

Of the composition with polycarbonate the notch impact strength was measured on a test bar with a sharp notch with a radius of 0.001 inch (0.0254 mm).

The notch impact strengths have been measured according to ISO 180 at 23ºC and are expressed in kJ/m2.

Comparative Example B

Of a corresponding composition of 80 parts by weight polycarbonate and 20 parts by weight ethylene-propylene-diene terpolymer modified with 2.0 parts by weight maleic anhydride the notch impact strength measured on a test bar with sharp notch was only 2 kJ/m2.

TABLE 1

| Ex. | 2 | 3 | 4 | 5 | 6 | 7 | 8 | 9 | 10 | 11 | 12 | 13 | 14 |
|---|---|---|---|---|---|---|---|---|---|---|---|---|---|
| PET[1] | 80 | 80 | 80 | 80 | 80 | 80 | | | | | | | |
| PBT[2] | | | | | | | 80 | 80 | 80 | 80 | 80 | 80 | |
| PC[3] | | | | | | | | | | | | | 80 |
| A1 | 20 | | | | | | 20 | | | | | | |
| A2 | | 20 | | | | | | 20 | | | | | |
| A3 | | | 20 | | | | | | 20 | | | | |
| A4 | | | | 20 | | | | | | 20 | | | |
| A5 | | | | | 20 | | | | | | 20 | | |
| A6 | | | | | | 20 | | | | | | 20 | |
| notch impact str. | 46 | 67.7 | 40 | 60 | 50 | 44 | 6.7 | 17.3 | 9.7 | 25 | 59.3 | 40 | 35* |

[1] polyethyleneterephthalate (Arnite A 04-900)
[2] polybutyleneterephthalate (Arnite T 02-600)
[3] polycarbonate (Sinvet 221)
* measured on a sharp notch with a radius of 0.001 inch (0.0254 mm).

Example 15

In a manner similar to the preceding examples, 30 parts Keltan 378 modified with 2% (wt) maleic anhydride, 60 parts non-modified Keltan 378 and 10 parts Phenoxy PKHH were kneaded in a Brabender Plasticorder at 180ºC for 5 minutes at 100 revolutions per minute. 20 parts of the composition thus obtained were subsequently kneaded at 250ºC for 5 minutes at 100 revolutions per minute with 80 parts polybutyleneterephthalate (Arnite T 02-600). The notch impact strength of that mixture measured in the usual manner was 24.0 kJ/m2.

Examples 16-17 and Comparative Example C

Compositions were prepared in a Brabender Plasticorder at 180ºC at 100 revolutions per minute comprising an ethylene-propylene rubber (Tafmer PO680, Mitsui), modified however, by grafting 1.1 wt.% maleic anhydride, and a phenoxy resin as mentioned in Example 1 (Blend B1) or a phenoxy resin marketed by Union Carbide under the trade name phenoxy PKHM (Blend B2) in a mixing ratio of 90/10.

Both B1 as B2 were mixed with polycarbonate (Xantar IV 1900, DSM) in a Brabender Plasticorder at 250¤C for 5 minutes at 100 revolutions per minute.

From the obtained blends the impact (kJ/m²) according to ISO 180 at 23¤C was measured, using a sharp notch with a radius of 0.001 inch (0.0254).

TABLE 2

| Example | PC | B1 | B2 | Notch impact |
|---|---|---|---|---|
| 16 | 80 | 20 | - | 36.6 |
| 17 | 80 | - | 20 | 33.8 |
| C | 100 | - | - | 2.8 |

Examples 18-19 and Comparative Example D

The same procedure as example 17, however in the second mixing step 10 parts by weight of an unmodified ethylene-propylene rubber (Tafmer P 0680, Mitsui) was added. See table 3.

TABLE 3

| Example | PC | B1 | B2 | EPR | Impact notch |
|---|---|---|---|---|---|
| 18 | 80 | 10 | - | 10 | 32.1 |
| 19 | 80 | - | 10 | 10 | 33.7 |
| D | 80 | - | - | 20 | 6.0 |

Examples 20-21 and Comparative Example E

In these experiments all the components (same as example 17) were mixed in one step in a Brabender Plasticorder at 250¤C for 5 minutes at 100 revolutions per minutes.

TABLE 4

| Example | PC | EPR-MZA | Ph. PkHH | pH PkHM | Notch impact |
|---|---|---|---|---|---|
| 20 | 80 | 18 | 2 | - | 31.2 |
| 21 | 80 | 18 | - | 2 | 32.9 |
| E | 80 | 20 | - | - | 6.3 |

Claims

1. Polyester composition consisting of:
a. at least 50% (wt) polyester,
b. a minor amount of a thermoplastic polymer with a modulus of elasticity lower than 350 N/mm², modified

7

with reactive groups or groups convertible thereinto,

c. a minor amount of another kind of polymer,

characterized in that component c is a phenoxy resin.

2. Polyester composition according to claim 1, characterized in that it consists of:

a. at least 50% (wt) polyester,

b. 5-49.5% (wt) thermoplastic polymer with a modulus of elasticity lower than 350 N/mm$^2$, modified with reactive groups or groups convertible thereinto,

c. 0.5-10% (wt) phenoxy resin

where a + b + c = 100 parts by weight.

3. Polyester composition according to any one of claims 1-2, characterized in that the composition consists of:

a. 70-94.5% (wt) polyester,

b. 5-25% (wt) of a modified elastomer and

c. 0.5-5% (wt) phenoxy resin,

where a + b + c = 100 parts by weight.

4. Polyester composition according to any one of claims 1-3, characterized in that the weight ratio of component b to component c is from 4 : 1 to 40 : 1.

5. Polyester composition according to claim 4, characterized in that the weight ratio of component b to component c is from 10 : 1 to 20 : 1.

6. Polyester composition as described in the specification and in the examples.

7. Process for preparing a polyester composition with improved notch impact strength according to any one of claims 1-6, characterized in that component b and component c are mixed with each other at 100°C at least and the composition obtained in that process is mixed with component a and any other components.

8. Process according to claim 7, characterized in that component b and component c are mixed with each other at 150°C at least.

9. Process according to claim 7 or 8, characterized in that component b and component c are mixed with each other at 230°C at most.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 096 893 (DAINIPPON INK AND CHEMICALS)<br>* Claims 1,2,5,6 *<br>--- | 1-9 | C 08 L 67/00 //<br>(C 08 L 67/00<br>C 08 L 57:04<br>C 08 L 71:00 ) |
| A | EP-A-0 148 774 (MITSUBISHI GAS CHEMICAL CO.)<br>* Claims 1-6,10-14 *<br>--- | 1-9 | |
| A | US-A-3 962 174 (BERARDINELLI)<br>* Claims 1-6 *<br>----- | 1 | |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 12-03-1990 | DECOCKER L. |